# EUROPEAN PATENT APPLICATION

(11) **EP 1 669 775 A1**
(43) Date of publication of application: **14.06.2006**
(21) Application number: 04078327.6
(22) Date of filing: 08.12.2004
(51) Int. Cl.: G01S 11/16, G01S 5/30

(54) **Method and system for determining the location and/or speed of at least one swimmer**

(71) Applicant: Nederlandse Organisatie voor toegepast-natuurwetenschappelijk Onderzoek TNO, 2628 VK Delft (NL)
(72) Inventor: van 't Klooster, Sebastian Antonius, 6031 PH Nederweert (NL); Janssen, Erwin Johannes Gerardus, 5758 PL Neerkant (NL); van Zanten, Albertus, 5235 DP 's-Hertogenbosch (NL); Hoppenbrouwers, Marcus Benedictus, 5611 JX Eindhoven (NL)
(74) Representative: Winckels, Johannes Hubertus F.

(57) **Abstract**

Method for determining the location and/or speed of at least one swimmer, swimming through water, comprising:
- sending acoustic signals through the water, using stationary acoustic transmitter means (AT) having a stationary position, or using mobile acoustic transmitter means (AT') being carried by said swimmer (S);
- receiving the acoustic signals using mobile acoustic receiver means (AR) being carried by said swimmer (S), or using stationary acoustic receiver means (AR') respectively;
- determining the time difference between the time of sending and the time of receiving each acoustic signal;
- determining a location and/or speed of said swimmer (S) with respect to said stationary transmitter means (AT) or stationary receiver means (AR'), using said time differences and a predetermined propagation speed of the acoustic signal through the water.

## Description

The invention relates to a method and system for determining the location and/or speed of at least one swimmer, swimming through water, for instance to analyse the performance of the swimmer.

From practice it is known to measure the speed of a swimmer manually, using a stop-watch. Usually, the stop-watch is activated when the swimmer starts swimming a track, for example a track of a swimming pool. When the swimmer has finished a lap or certain distances, the stop-watch is operated again, so that the average speed of the swimmer can be determined. A drawback of this method is, that the speed of the swimmer can not be determined instantaneously during the swimming of the track. Besides, this method is not suitable to determine the instantaneous location of the swimmer, for instance to follow his/her progress of the track during the swimming. Also, this known method does not provide sufficient data for a detailed analysis of the performance of a number of swimmers participating in a training, race or match.

International patent application WO 02/077653 discloses a system, comprising a number of cameras for monitoring the progress of swimmers. This system is, however, relatively inaccurate, complex, bulky, and expensive.

The present invention aims to provide an improved method and system for determining the location and/or speed of at least one swimmer, swimming through water. Particularly, the invention aims to provide a method and system for determining the location and/or speed of at least one swimmer with relatively high accuracy and using relatively simple means, preferably such that a detailed analysis of the performance of a number of swimmers can be made.

In an aspect of the invention, there is provided a method for determining the location and/or speed of at least one swimmer, swimming through water, comprising:
- sending acoustic signals through the water, using stationary acoustic transmitter means, or using mobile acoustic transmitter means being carried by said swimmer;
- receiving the acoustic signals using mobile acoustic receiver means being carried by said swimmer or using stationary acoustic receiver means respectively;
- determining the time difference between the time of sending and the time of receiving each acoustic signal;
- determining a location and/or speed of said swimmer with respect to said stationary transmitter means or stationary receiver means, using said time differences and a predetermined propagation speed of the acoustic signal through the water.

Therefore, acoustic signals, propagating through the water, are simply used to determine the location and/or speed of the swimmer. The acoustic signals can be, for example, ultrasonic pulses or other suitable sound signals. Said predetermined propagation speed of the acoustic signal can be, for example, measured, calculated, determined from handbooks, stored in a memory and/or the like.

The speed of a swimmer is preferably being determined from a plurality of subsequent swimmer locations, wherein each of these swimmer locations is being determined using the above-described manner of the invention.

For example, the acoustic signals can be transmitted from one or more locations that have fixed positions with respect of the water. In that case, the acoustic signals are received -at certain times of receiving- by mobile receiver means that are carried by said swimmer.

Alternatively, the acoustic signals can be transmitted from mobile transmitting means carried by said swimmer, wherein the signals are received by stationary receiving means. In each case, the difference between the time of sending and the time of receiving each signal is simply used in calculating the location and/or speed of the swimmer. In this calculation, a predetermined acoustic propagation speed through water is used.

Acoustic signals can be sent reliably and accurately through water, with relatively high propagation speeds (about 1.5 km/s) and over relatively long distances. These characteristics of acoustic signals make the present method relatively accurate with respect to known methods for determining swimmer speeds and/or locations. Besides, means for transmitting and receiving such signals can be relatively cheap, so that implementation of the invention does not have to involve large expenses. Also, the invention can be embodied in a small, portable system.

According to an embodiment of the invention, at least one electromagnetic triggering signal is being sent to said mobile acoustic transmitter means at at least one predetermined time, wherein the mobile acoustic transmitter means send said acoustic signal under influence of receiving said triggering signal, wherein said predetermined time is used in determining the time of sending said acoustic signal.

Therefore, the mobile transmitter means, which can be carried by said swimmer, can be activated by electromagnetic remote control. Since the electromagnetic signals travel at light speed, the time of sending said triggering signal will be substantially the same as the time the mobile acoustic transmitter means receive that signal. Furthermore, the mobile acoustic transmitter means send said acoustic signal under influence of receiving that triggering signal, substantially at the same time or after a predetermined period. Thus, the time of sending that acoustic signal can be easily deduced from the time of sending the electromagnetic triggering signal. The result, being the time of sending the acoustic signal, can subsequently be used in the determination of the time difference between the time of sending and the time of receiving each acoustic signal, for determining the location and/or speed of said swimmer.

Alternatively, said mobile acoustic transmitter means may be arranged or programmed, to send said acoustic signals at predetermined times, for instance using triggering signals of a high-precision internal clock which can be coupled or integrated in such transmitter means.

Besides, in an alternative embodiment of the invention, particularly when said swimmer carries mobile acoustic receiver means, these acoustic receiving means send at least one electromagnetic reply signal under influence of the receiving of said acoustic signal, sent by the fixed acoustic transmitter means, wherein said electromagnetic reply signal is used in the determination of the time of receiving said acoustic signal.

In this case, the electronic reply signal can be used for wireless communication with the mobile acoustic receiving means, to determine the time these receiving means receive the acoustic signals. Analogous to the above, since the electromagnetic reply signal travels at the light speed, the time of sending said reply signal will be substantially the same as (or at least correlated to) the time of suitable electronic receiving means receiving that signal. Since the acoustic receiving means send said electromagnetic reply signal under influence of the receiving of said acoustic signal, substantially at the same time or after a predetermined period, the time of receiving that acoustic signal can be easily deduced from the time of sending the electromagnetic reply signal. The result, being the time of receiving the acoustic signal by said swimmer, can subsequently be used in the determination of the time difference between the time of sending and the time of receiving each acoustic signal, also for determining the speed and /or location of said swimmer.

In each case, said electromagnetic signal, being a triggering or reply signal, can be sent in various ways, for instance through the water and/or through air extending above the water, depending for instance on the type of electromagnetic frequency used and the range that signal has to propagate between a sending and receiving location.

In an aspect of the invention, there is provided a system for determining the location and/or speed of at least one swimmer, swimming through water, the system preferably being arranged to carry out the above described method according to the invention, wherein the system comprises:
- at least one stationary acoustic transmitter or at least one mobile acoustic transmitter, each transmitter being arranged for sending acoustic signals through the water;
- at least one mobile acoustic receiver or at least one stationary acoustic receiver respectively, for receiving said acoustic signals;
- a control which is coupled to said acoustic transmitter and/or to said acoustic receiver, wherein the control is at least arranged to determine the location and/or speed of said swimmer with respect to said stationary transmitter or stationary receiver, using differences between the time of sending and the time of receiving each acoustic signal, and using a predetermined propagation speed of the acoustic signal through the water.

The system according to the invention can determine location and/or speed of one or more swimmers relatively accurately, using relatively simple and inexpensive means, particularly when carrying out the method according to the invention.

Preferably, the system can be moved from one swimming location to an other, for instance to be installed subsequently in various swimming pools, for timing and monitoring respective training exercises and/or sporting events.

In a further aspect of the invention, there is provided swimming water, for instance a pool, track, open water or the-like, comprising at least one stationary acoustic transmitter or at least one stationary acoustic receiver respectively, as well as the control of a system according to at least claim 10 for determining the location and/or speed of at least one swimmer.

Thus, the control, acoustic transmitter or receiver can provide the swimming water with the above-mentioned advantages, when combined with the use of said mobile acoustic receiver or transmitter respectively.

Also, in an aspect of the invention, there is provided a mobile unit, arranged to be carried by a swimmer, the unit at least being arranged as mobile acoustic transmitter and/or receiver of a system according to at least claim 10, which also provides the above-mentioned advantages.

Besides, the present invention provides computer software with computer instructions, arranged for carrying out at least a method according to the invention when the software is executed by a computer, for instance for programming the computer to be a control of a system according to the invention. Such computer software may be provided, for instance, in a suitable memory, on one or more information carriers, CDROM, DVD, via a computer network, for example via Internet, and/or the like.

Besides, in an aspect of the invention, there is provided a method for monitoring the swim stroke of a swimmer, wherein the swimmer is provided with a signal transmitter for generating a suitable swim stroke monitoring signal, wherein a periodic change of the signal strength of the transmitted monitoring signal, due to the signal transmitter being held periodically in and out of the water by the swimmer, is being detected by a signal receiver.

Further embodiments of the invention are described in the dependent claims.

Embodiments of the invention will now be described, by way of example only, with reference to the accompanying schematic drawings in which corresponding reference symbols indicate corresponding parts, and in which:
Figure 1 schematically shows a top view of a first embodiment of the invention, during the sending of acoustic signals;
Figure 2 is a view similar to Fig. 1, during the sending of an electromagnetic reply signal;
Figure 3 is a top view of a second embodiment of the invention;
Figure 4 is a top view of a third embodiment of the invention;
Figure 5 shows a time line; and
Figure 6 shows a display for displaying the progress of the swimmers.

In the present application, corresponding or similar reference signs are used for corresponding or similar features.

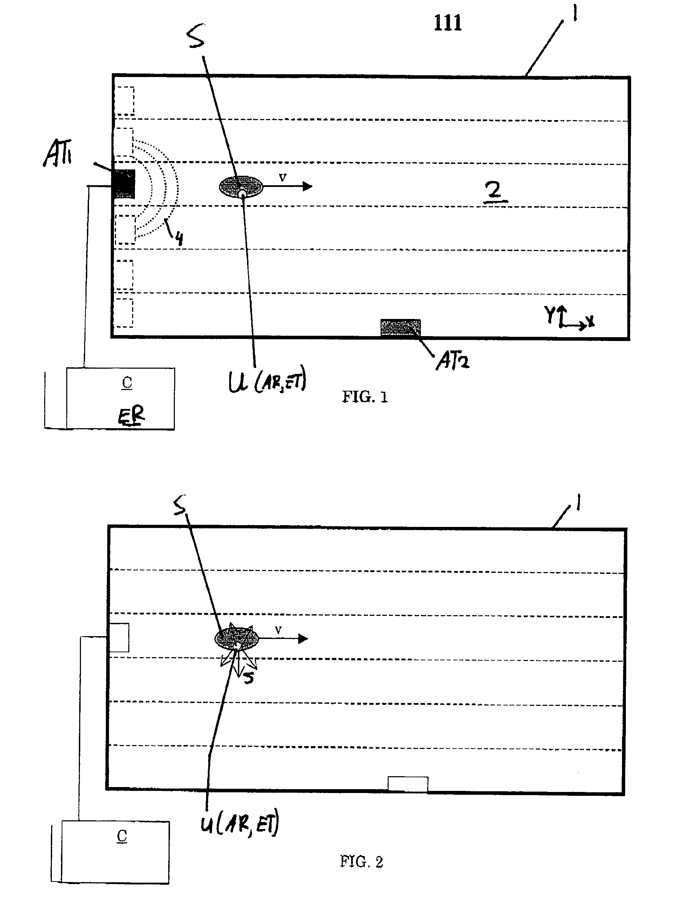

Figure 1 shows a top view of a first embodiment of the invention. The first embodiment is a swimming pool 1 containing swimming water, and comprising a plurality of parallel swimming tracks for swimmers. One swimmer, swimming along a track 2 in the water, is schematically shown by the dark shaded oval S. The swimmer has a certain X-Y position in the pool 1, and a certain horizontal speed which is indicated by an arrow v. The dimensions of the pool may be, for instance, standardized Olympic pool dimensions (50 m long x 25 m wide), or other dimensions. In the present embodiment, the pool 1 has six tracks, but it is clear that the pool 1 may also have a different number of tracks, for instance eight or otherwise.

The first embodiment comprises a system for determining the location and/or speed of the swimmer S. The system can be used, for example, during training and/or sporting events.

The system comprises a number of stationary acoustic transmitters AT. Each transmitter AT is arranged for sending acoustic signals through the water, when the transmitter is being held underwater during use. The acoustic signals can be, for example, relatively short ultrasonic pulses, and/or other suitable signals or the-like. The acoustic transmitters AT can be arranged in various ways, and located on various locations in the water, as will be clear to the skilled person. In the present embodiment, the acoustic transmitters AT are located such, that the location of said swimmer can be determined along in at least two different horizontal axes, for instance for determining the swimmer position in a horizontal plane, along an X-axis and an orthogonal Y-axis, as shown in fig. 1. In the present embodiment, one acoustic transmitter AT1 has been mounted on a short side of the pool 1 (in the water), whereas the other transmitter AT2 has been mounted in the water on a long side of the pool 1. In the embodiment of figure 1, the swimmer S swims along the X-axis, in a track 2 having a fixed position along the Y-axis. Therefore, during use, the Y-position of the swimmer S will be known. In that case, the application of the acoustic transmitter AT2 along the long side of the pool 1 is superfluous. Also, preferably, each track 2 of the pool 1 is being provided with a respective acoustic transmitter AT1 at a short side of the pool 1, for sending acoustic pulses towards a swimmer S swimming in the respective track 2. These further acoustic transmitters have been depicted by dashed lines in fig. 1.

The system of the first embodiment further comprises a portable acoustic receiver AR, to be held underwater during use for receiving acoustic signals which are sent by the acoustic transmitters AT1 and/or AT2. This acoustic receiver AR is part of a mobile unit U, which is carried by the swimmer S. Preferably, this mobile unit U can be worn by the swimmer S such that the unit U does not substantially hamper the swimming performance of the swimmer. For instance, this unit U may be part of, or be worn beneath, a swimming suit, cap and/or the like.

Besides, the system comprises a control C which is coupled to said acoustic transmitter AT, as well as to said acoustic receiver AR. The control C is at least arranged to determine the speed and/or location of said swimmer S with respect to said stationary transmitter or stationary receiver, using differences between a time of sending and a time of receiving each acoustic signal, and using a predetermined or otherwise known propagation speed of the acoustic signal through the water. The control C is coupled to the acoustic signal transmitters AT1, AT2, for instance wirelessly and/or by wired links, for controlling these transmitters AT1, AT2 to send desired acoustic signals. For instance, the control C and acoustic transmitters AT1, AT2 can be arranged to send said acoustic signals intermittently, periodically and/or the-like.

The control C as such can be arranged and constructed in various ways, and may for example comprise one or more computers, PCs, suitable electronics and/or the-like. Computer software can be provided, which software is arranged to be loaded in a computer, for programming the computer to be a suitable control C to control the method according to the invention, to perform desired calculations for determining location and/or speed of said swimmer.

In the present first embodiment, the control C is coupled wirelessly to said mobile acoustic receiver AR, using an electromagnetic transmitter ET and at an electromagnetic receiver ER. In the present embodiment, said electromagnetic transmitter ET is also carried by the swimmer S. The electromagnetic transmitter ET may be, for example, part of or coupled to the mobile unit U. The electromagnetic receiver ER is part of, or coupled to, the control C. In the first embodiment, said mobile acoustic receiver AR is arranged to send at least one electromagnetic reply signal, via said electromagnetic signal transmitter ET, under influence of the receiving of said acoustic signal.

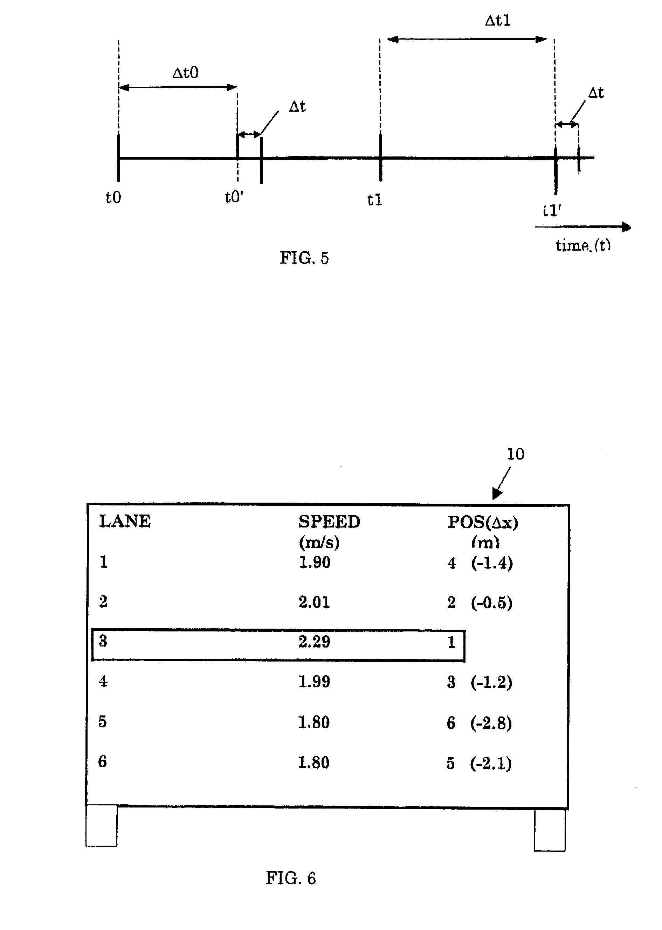

Preferably, the control C is arranged to store swimmer identification information, and to use this information for recognizing signals received from different swimmers S. Besides, in a preferred embodiment, the system comprises a memory for storing calculated speeds and/or locations of each swimmer S. Such a memory can be, for instance, part of the control C. Besides, the system may comprise a display for displaying said location and/or speed of said swimmer, for instance real-time. An example of such a display is shown in figure 6, and will be described below. Also, the system may comprise announcing means, for instance a number of loudspeakers, for announcing said location and/or speed of said swimmer S. Besides, communication means can be provided for sending location and/or speed of said swimmer to a remote location via a communication network, such as the Internet. Said announcing means and communication means may be coupled to and/or be part of the control C, but are not specifically shown in the figures.

The system shown in fig. 1 may be arranged to use a plurality of different acoustic signals for instance having different frequencies. For instance, each frequency can be assigned to a specific track 2 or mobile unit U, and thus to a specific swimmer S swimming along that track 2 and carrying that unit U.

Besides, each said acoustic and/or electromagnetic signal preferably comprises swimmer identification information, which may be identification for identifying at least the mobile unit U worn by a certain swimmer S. Such information can be, for example, digital code, a swimmer name, track code and/or the-like.

During use of the first embodiment, the stationary acoustic transmitters AT can be controlled by the control C to send suitable acoustic signals through the water. Such signals are shown by dotted semi-circle lines 4 in figure 1. Figure 5 shows a time line, wherein t0 denotes a first starting time when the first acoustic transmitter AT1 sends a first respective acoustic signal 4 towards the swimmer S. In the time line, t1 denotes a starting time when the first acoustic transmitter AT1 sends a subsequent second respective acoustic signal 4. The starting times t0, t1 of sending the acoustic signals 4 is being registered by the control C, for instance by storing these times in a memory.

In one embodiment, mobile units U carried by various swimmers S may be arranged to reply to the same acoustic signals 4. Alternatively, each acoustic signal 4 has a specific frequency, assigned to the swimmer S, and/or comprises swimmer identification information, such as has been mentioned above. Besides, for instance, the various acoustic transmitters AT may send different acoustic signals which comprise transmitter identification codes.

Each of the acoustic signals 4 takes a certain amount of time to reach the mobile unit U of the swimmer S, depending on the sound velocity in the water and the distance between the swimmer S and the respective acoustic transmitter AT1. The acoustic signals 4 are received by the mobile unit U of the swimmer S, on times t0', t1' using the mobile acoustic receiver AR. In fig. 5, time t0' denotes the time the mobile unit U receives the first signal from the first acoustic transmitter AT1, whereas time t1' is the time the unit U receives the subsequent, second, signal from the transmitter AT1.

Optionally, each time the acoustic receiver AR of the mobile unit U receives an acoustic signal, the mobile unit U may check whether that signal is destined for that mobile unit U, for example by filtering an swimmer assigned frequency band from the signal and/or by checking optional swimmer identification information that may be contained in the acoustic signal.

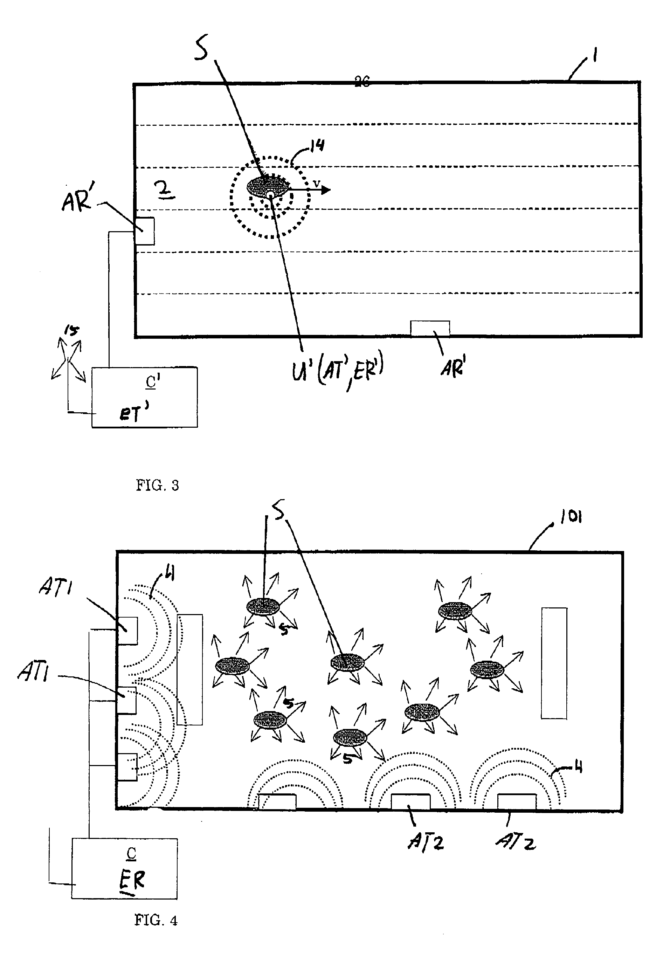

Under influence of the receiving of each acoustic signal 4, and if the optional check whether the signal is destined for that mobile unit, is affirmative, the mobile unit U sends a suitable electromagnetic reply signal, using the respective electromagnetic transmitter ET. A reply signal is schematically shown in figure 2, by arrows 5. The reply signal may be for example a relatively short electromagnetic signal, pulse or the-like.

Preferably, each reply signal 5 is sent using a swimmer related frequency and/or comprising suitable swimmer identification information, so that the control C can identify that signal 5 as coming from a certain swimmer S. Also, each reply signal 5 optionally comprises an acoustic transmitter identification code..

The sending of the reply signal 5 preferably follows immediately after the receiving of the acoustic signal 4, for instance at substantially the same time or after a predetermined, short, time period Δt, depending for example on the specific arrangement, for instance electronics of the mobile unit U. Preferably, any time gap Δt between the receiving of an acoustic signal 4 and the subsequent sending of a reply signal 5 -by mobile unit U- is already known and stored in the control C. Such time gap Δt, which is also depicted in fig. 5, can easily be measured beforehand, using standard calibration techniques.

The reply signal 5 is received by the control C, via the electromagnetic receiver ER. Since each electromagnetic reply signal travels 5 at the light speed, the time of sending these reply signals will be substantially the same as the time of the receiver ER of the control C receiving that signal.

From the time of receiving the reply signal 5, and said optional time gaps Δt, the control can simply deduce the times t0', t1' when the mobile unit U of the swimmer S has received said two acoustic signals 4, that were sent at starting times t0, t1 by the first acoustic transmitter AT1.

Then, the control C determines the time differences Δt0 and Δt1 between the starting times t0, t1 and the times t0', t1' of receiving these signals. The result is used by the control C to determine subsequent locations and speed of the swimmer S with respect to said first stationary transmitter AT1, and thus the location and/or speed of the swimmer S in the pool 1. Herein, the speed of the swimmer can simply be determined from subsequent swimmer locations, after these subsequent swimmer locations have been determined using the results of said time differences Δt0 and Δt1. Then, the swimmer speed is equal to the difference in distance between these two subsequent locations, divided by (t1-t0).

Herein, the control C also uses said propagation speed of the acoustic signal through the water. This sound speed can already have been stored in the control. This sound speed can also have been measured by the control C, using appropriate calibration means, for instance using one or more spaced-apart stationary acoustic transmitters and receivers.

Preferably, during use, a plurality of said acoustic signals 4 is being sent intermittently by each acoustic transmitter AT, resulting in a plurality of acoustic signals being received by the mobile unit U, and resulting in a plurality of subsequent measurements of swimmer location and/or speed. For instance, subsequent acoustic trigger pulses 4 can be generated by each transmitter AT in short periods of time, for example one or more signals per second, as long as the swimmer S is swimming his laps. In this way, the progress of the swimmer can be monitored accurately, semi-continuously, along the track 2. The resulting, substantially instantaneous, measurements of swimmer location and/or speed can be stored by the control C, for instance to be used afterwards to analyse a race and/or as valuable training information. Besides, the control can use the above-described measurements to deduce other swimmer related data, for instance acceleration/deceleration of a swimmer S, race start times, finish times, intermediate timing, lap timing.

More than one swimmer S can be tracked at the same time, with relatively high precision, using the first embodiment. This can be achieved using the same acoustic signal, which is being send by said acoustic transmitters along the tracks 2, wherein the mobile units of the swimmers S send suitable reply electromagnetic signals upon receiving the acoustic signal. Alternatively, a plurality of different acoustic signals having different frequencies may be used for determining the speeds and/or locations of different swimmers. Also, each swimmer is preferably being identified by the system, using suitable identification information which is provided in the electromagnetic reply signals.

Besides, the system can be used to follow the progress of a race real-time, involving a number of swimmers swimming the tracks of the pool 1. For example, the control C can be coupled to a display for displaying speeds and/or locations of the various swimmmers. An example of such a display 10 is shown in figure 6. The display 10, which is being controlled by the control C, shows three columns, the first one indication the track (lane), the second one indication the measured average speed of the swimmer of the respective track, and the third one indication the order of the swimmers during the race. The row indicating the swimmer swimming in first position has been marked, in the present embodiment with an rectangle. Besides, the third column depicts the lead of this swimmer over his competitors. The data, shown by the display D, are calculated by the control C using the above-described method for determining location and/or speed of swimmers. As will be clear, the display 10 can be arranged in various ways.

Besides displaying swimmer location and/or speed, such data can for instance be stored in a memory, announced, and/or sent to a remote location via a communication network.

Figure 3 schematically shows a second embodiment of the invention. The second embodiment is substantially an equivalent of the embodiment shown in figures 1-2. In the second embodiment, electromagnetic triggering signals 15 are being sent by the control C', utilizing a stationary electromagnetic transmitter ET', to a portable unit U' which is carried by the swimmer S. The mobile unit U' of the second embodiment comprises an electromagnetic receiver ER' and an acoustic transmitter AT'. The mobile unit U' replies the receipt of each said electromagnetic signal 15 by sending an acoustic signal 14 through the water, utilizing a respective acoustic transmitter AT'. This acoustic signal 14 is being detected by a plurality of stationary acoustic receivers AR', located for instance along the sides of the pool 1. These acoustic receivers AR' are coupled to the control C, so that the control C can determine the times of detection of the acoustic signals. Analogous to the first embodiment, the control C of the second embodiment is arranged to determine the speed and/or location of said swimmer S with respect to said stationary receivers, using differences between times of sending and times of receiving acoustic signals 14, and using a predetermined propagation speed of the acoustic signal through the water. Besides, preferably, swimmer identification is being used for identifying the swimmer S, for instance by using acoustic signals of different frequencies and/or by providing identification data in the acoustic signals.

In the second embodiment, each acoustic signal is being sent along at least two different horizontal axes for determining at least one location of said swimmer S in at least two different horizontal directions. Preferably, to this aim, the acoustic transmitter AT', which is carried by the swimmer, is an omnidirectional transmitter, which transmits sound waves having substantially circular or spherical wave fronts.

It will be clear, that the invention can also be implemented, using a combination of the methods and/or systems as shown in figures 1-2 on the one hand and in figure 3 on the other hand.

Figure 4 shows a third embodiment of the invention, comprising a pool 101 arranged for a sporting game, for example water polo. During use, a large number of players S swim in the water. The pool 101 has been provided with a system according to the invention. This system is substantially similar to the system of the first embodiment, shown in fig. 2, but comprises a larger number of acoustic transmitters AT' arranged along the inner sides of the walls of the pool 101. Each of the players S has been provided with a mobile unit (not shown) for tracking the player, using the electromagnetic reply signals 5 and acoustic triggering signals 4. The control C can track positions of al the players real-time, via the determining of the times of transmission and receipt of the electromagnetic reply signals 5 generated by the mobile units of the players S (as in the first embodiment). Preferably, the locations of the players are being stored by the control C during a match. The resulting data can be used afterwards for analysing the match, improving game strategy and-the like.

While specific embodiments of the invention have been described above, it will be appreciated that the invention may be practiced otherwise than as described. The description is not intended to limit the invention.

For instance, each said acoustic transmitter and/or acoustic receiver can be arranged in various ways, comprising for example an acoustic transducer, and can be located in various locations. As an example, each track of a swimming coarse may be provided with one or more respective acoustic transmitters/receivers. Also, an acoustic transmitter and receiver can be provided in a combined acoustics unit, such as a suitable transducer.

The term "stationary" in the present application has a relatively broad meaning. The term "stationary" can be understood as being stationary with respect to the swimming water, pool, riverbed, or similar swimming water container, during use of the system, and/or method. After use, the relevant stationary part of the system may or may not be movable. For example, "stationary" can be understood as meaning "fixable or fixed with respect to the swimming water -or swimming water container- during use".

Preferably, each said acoustic signal is an ultrasonic signal. Besides, preferably, each said electromagnetic signal is a radio frequency (RF) signal, although the application of EM-signals of other frequency bands, for instance light, is also envisaged below or above water.

Advantageously, electromagnetic signals are used for wirelessly communicating at least with said mobile acoustic transmissions means and/or mobile acoustic receiving means. On the other hand, said mobile acoustic transmitters may be arranged or programmed, to send said acoustic signals at predetermined times, for instance using triggering signals of high-precision internal clocks which can be coupled or integrated in the acoustic transmitters. These clocks can be synchronized with a clock of said system control C before use, so that the control C still can determine the time differences between the sending and receiving of the acoustic signals, for determining swimmer related data.

Said control may be coupled to both said acoustic transmitter and to said acoustic receiver, for instance by suitable communication links. Such a link between said mobile acoustic transmitter and the control is superfluous in case the transmitter is arranged to transmit signals independently of the control, for example when that acoustic transmitter comprises a precise clock which is synchronized with a clock of the control.

Said water may comprise various types of water, for example sea water, water comprising substances such as salt, chlorine, and/or the like.

Furthermore, the system according to the invention may be arranged for monitoring the swim stroke of said swimmers. The system may be provided with a device similar to the device describe in US 5,864,518, or with any other device for determining the swim stroke. Data concerning the swim stroke can be transmitted by said mobile unit to the control C. Resulting swim stroke information can be stored together with the determined swimmer location and/or swimmer speed.

Also, said swim stroke can easily be monitored by providing the swimmer with a signal transmitter, such that the transmitter is being held periodically under and above the swimming water surface by the swimmer, when the swimmer swims along a track. The signal transmitter can be provided on an arm or leg, on the head, or any other suitable part of the swimmer, depending on the type of stroke used (breaststroke, backstroke, butterfly stroke, front crawl stroke). Such a signal transmitter is not shown in the Figures. The signal transmitter may, for instance, be part of or be coupled to said mobile unit. The signal transmitter is preferably arranged to transmit a substantially continuous swim stroke monitoring signal. A suitable signal receiver can be arranged in or out of the water for receiving the swim stroke monitoring signal. The periodic change of the signal strength of the transmitted swim stroke monitoring signal, due to the signal transmitter being held periodically in and out of the water, can be easily detected by the receiver, and is preferably being processed and/or stored by the control C. The swim stroke signal can be, for example, an acoustic or electromagnetic signal.

## Claims

1. Method for determining the location and/or speed of at least one swimmer, swimming through water, comprising:
- sending acoustic signals through the water, using stationary acoustic transmitter means (AT) having a stationary position, or using mobile acoustic transmitter means (AT') being carried by said swimmer (S);
- receiving the acoustic signals using mobile acoustic receiver means (AR) being carried by said swimmer (S), or using stationary acoustic receiver means (AR') respectively;
- determining the time difference between the time of sending and the time of receiving each acoustic signal;
- determining a location and/or speed of said swimmer (S) with respect to said stationary transmitter means (AT) or stationary receiver means (AR'), using said time differences and a predetermined propagation speed of the acoustic signal through the water.

2. Method according to claim 1, wherein at least one electromagnetic triggering signal is being sent to said mobile acoustic transmitter means (AT') at at least one predetermined time, wherein the mobile acoustic transmitter means (AT') send said acoustic signal under influence of receiving said triggering signal, wherein said predetermined time is used in determining the time of sending said acoustic signal.

3. Method according to claim 1, wherein the mobile acoustic receiving means (AR) send at least one electromagnetic reply signal under influence of the receiving of said acoustic signal, wherein said reply signal is used in the determination of the time of receiving said acoustic signal.

4. Method according to any of the preceding claims, wherein said acoustic signal comprises swimmer identification information.

5. Method according to any of claims 2 or 3, wherein each said electromagnetic signal comprises swimmer identification information.

6. Method according to any of the preceding claims, wherein at least one, for instance a plurality, of said acoustic signals is being sent intermittently, resulting in a plurality of acoustic signals being received.

7. Method according to any of the preceding claims, wherein said location and/or speed of said swimmer are stored in a memory, displayed, announced, and/or sent to a remote location via a communication network.

8. Method according to any of the preceding claims, wherein said acoustic signal is being sent along at least two different horizontal axes for determining at least one location of said swimmer (S) in a horizontal plane (X, Y).

9. Method according to any of the preceding claims, wherein at least two subsequent locations of said swimmer (S) are determined using differences between the times of sending and the times of receiving subsequent acoustic signals, wherein the speed of said swimmer (S) is determined using the results of the determination of these at least two subsequent swimmer locations..

10. System for determining the location and/or speed of at least one swimmer, swimming through water, the system preferably being arranged to carry out a method according to any of the preceding claims, wherein the system comprises:
- at least one stationary acoustic transmitter (AT) or at least one mobile acoustic transmitter (AT'), each transmitter (AT; AT') being arranged for sending acoustic signals through the water;
- at least one mobile acoustic receiver (AR) or at least one stationary acoustic receiver (AR') respectively, for receiving said acoustic signals;
- a control (C) which is coupled to said acoustic transmitter (AT; AT') and/or to said acoustic receiver (AR; AR'), wherein the control (C) is at least arranged to determine the location and/or speed of said swimmer (S) with respect to said stationary transmitter or stationary receiver, using differences between the time of sending and the time of receiving each acoustic signal, and using a predetermined propagation speed of the acoustic signal through the water.

11. System according to claim 10, wherein said control (C) is coupled wirelessly to said mobile acoustic transmitter (AT') or to said mobile acoustic receiver (AR), by at least one electromagnetic transmitter (ET; ET') and at least one electromagnetic receiver (ER; ER').

12. System according to claim 11, wherein said control (C) is arranged to send at least one electromagnetic triggering signal to said mobile acoustic transmitter (AT') at at least one predetermined time, wherein each mobile acoustic transmitter (AT') is arranged to send said acoustic signal in reply to the receiving of said triggering signal.

13. System according to claim 11, wherein said mobile acoustic receiving means (AR) are arranged to send at least one electromagnetic reply signal under influence of the receiving of said acoustic signal.

14. System according to any of the claims 10-13, wherein said control is arranged to store swimmer identification information, and to use this information to distinguish signals received from different swimmers.

15. System according to any of the preceding claims, arranged to send said acoustic signals intermittently.

16. System according to claim 15, comprising at least one of the following:
- a memory for storing said calculated location and/or speed of said swimmer;
- a display for displaying said location and/or speed of said swimmer,
- announcing means for announcing said location and/or speed of said swimmer;
- communication means for sending said location and/or speed of said swimmer to a remote location via a communication network.

17. System according to any of the claims 10-16, wherein said acoustic transmitter is arranged to send said acoustic signal along at least two different horizontal axes, for determining at least one location of said swimmer in a horizontal plane (X, Y).

18. System according to any of the claims 10-17, arranged to use a plurality of different acoustic signals having different frequencies.

19. System according to any of claims 10-18, comprising at least two spaced apart stationary acoustic receivers (AR').

20. Swimming water, for instance a pool, track, open water or the-like, comprising at least one stationary acoustic transmitter (AT) or at least one stationary acoustic receiver (AR') respectively, as well as the control (C) of a system according to any of claims 10-19 for determining the location and/or speed of at least one swimmer.

21. Mobile unit, arranged to be carried by a swimmer, the unit at least being arranged as mobile acoustic transmitter and/or receiver of a system according to any of claims 10-19.

22. Computer software with computer instructions, arranged for carrying out at least a method according to any of claims 1-9 when the software is executed by a computer, for instance for programming the computer to be a control of a system according to any of claims 10-19.

23. Method according to any of claims 1-9, wherein the swim stroke of said swimmer is monitored as well.

24. Method for monitoring the swim stroke of a swimmer, for instance in a method according to claim 23, wherein the swimmer is provided with a signal transmitter for generating a suitable swim stroke monitoring signal, wherein a periodic change of the signal strength of the transmitted monitoring signal, due to the signal transmitter being held periodically in and out of the water by the swimmer, is being detected by a signal receiver.
